# NEW EUROPEAN PATENT SPECIFICATION

(11) **EP 3 436 285 B2**
(45) Date of publication and mention of the opposition decision: **10.04.2024**
(45) Mention of the grant of the patent: 27.05.2020
(21) Application number: 17714537.2
(22) Date of filing: 23.03.2017
(51) Int. Cl.: B42D 25/29, B42D 25/351, B42D 25/364, B42D 25/378, B42D 25/21

(54) **OPTICALLY VARIABLE DEVICE AND METHOD OF FORMING THEREOF**
OPTISCH VARIABLE VORRICHTUNG UND VERFAHREN ZUR FORMUNG DAVON
DISPOSITIF À VARIATION OPTIQUE ET SON PROCÉDÉ DE FORMATION

(30) Priority: 31.03.2016 GB 201605404
(43) Date of publication of application: 06.02.2019
(73) Proprietor: De La Rue International Limited, Basingstoke, Hampshire RG22 4BS (GB)
(72) Inventor: WHITEMAN, Robert, Reading Berkshire RG4 7ST (GB)
(74) Representative: Gill Jennings & Every LLP
(86) International application number: PCT/GB2017/050822
(87) International publication number: WO 2017/168124

(56) References cited:
- EP-A1- 1 976 708
- WO-A1-2008/017864
- WO-A1-2014/201559
- US-A1- 2010 001 509

## Description

### Field of the Invention

The invention relates to optically variable devices, for example for inclusion in or on a security document, such as a document of value. The invention also relates to methods of forming optically variable devices.

### Background to the Invention

Articles of value, and particularly documents of value such as bank notes, cheques, passports, identification documents, certificates and licences, are frequently the target of counterfeiters and persons wishing to make fraudulent copies thereof and/or changes to any data contained therein. Typically such objects are provided with a number of visible devices which are difficult to counterfeit and therefore are useful for checking the authenticity of the article.

One class of devices are those which produce an optically variable effect, meaning that the appearance of the device is different at different angles of view. Such devices are particularly effective since direct copies (e.g. photocopies) will not produce the optically variable effect and hence can be readily distinguished from genuine devices. Optically variable effects can be generated based on various different mechanisms, including holograms and other diffractive devices, moiré interference and other mechanisms relying on parallax such as venetian blind devices. Certain devices which make use of optically variable effects require the use of at least one transparent material representing a viewing region or "window".

Optically variable devices that exhibit angularly dependent coloured effects are also known, including so-called "optical interference structure materials", which display different colours at different viewing angles. Such materials may include so-called "iridescent amplitude interference materials". Examples include thin-film interference structures, interference pigments, pearlescent pigments, liquid crystal film and pigments, photonic crystals and the like. Thin film interference structures comprise repeating layers of different refractive indices, and can include, for example, purely dielectric stacks (metal oxide or polymer) or can be composed of alternate dielectric and metallic layers. Thin film interference structures are also known as Bragg stacks or 1D photonic crystals.

What all of the above examples have in common is the provision of two or more closely spaced interfaces, at least one of which partially reflects and partially transmits incident light, i.e. the amplitude of the incident light is split. The transmitted portion is reflected at the second or subsequent interfaces and interferes with the portion reflected from the first or earlier interfaces, leading to constructive interference of some wavelengths and destructive interference of others, and hence a characteristic colour which varies with viewing angle.

Although optically variable devices displaying angularly dependent coloured effects are known, there is no teaching in the prior art on how to incorporate such devices into security documents to achieve observable effects in reflection as well as in transmission from the same region of material receiving incident light. The object of the current invention is to improve the security of the devices described in the prior art.

Patent document WO 2014/201559 A discloses an optical security device having features similar to the preamble of independent claim 1.

### Summary of the Invention

In accordance with one aspect of the present invention, there is provided an optically variable device comprising a substrate having a transparent viewing region and a layer of optical interference structure material for selectively reflecting and transmitting incident light to generate an optically variable effect, the layer of optical interference structure material having a front side and a rear side, the device further comprising an absorbing layer comprising an at least partially light absorbing material on the rear side of the layer of optical interference structure material, such that,
- when a region on the front side of the layer of optical interference structure material receives incident light and the device is viewed in reflected light, the absorbing layer is sufficiently opaque to absorb light that passes through the optical interference structure material and the optically variable effect is observable in reflected light; and
- when the same region on the front side is viewed in transmitted light, the absorbing layer is sufficiently transparent to permit the passage of light with an intensity that exceeds the intensity of reflected light for the optically variable effect to be observable in transmitted light,
wherein the absorbing layer is in the form of a screen, wherein the pattern of absorbing material is an array of dots or lines, and the width of the lines or the diameter of the dots is in the range 50-300 µm, and the spaces between the dots or lines are in the range 50-300 µm, with values of each set chosen to achieve a screen coverage in the range 40-70%.

The present inventors have realised that by using a layer of optical interference structure material applied to a window (transparent viewing region of the substrate) in combination with at least partially absorbing material which is capable of absorbing as well as transmitting light, it is possible to observe strong reflection as well as transmission effects from the same region of optical interference structure material illuminated with incident light. The absorbing layer comprising the at least partially light absorbing material is preferably in the form of a screen which backs the layer of optical interference structure material.

On one hand, when viewed in reflection from the front side, the absorbing layer is sufficiently opaque to absorb wavelengths of light which are not reflected by the optical interference structure material and reaches the absorbing layer. A sufficiently high proportion of the light transmitted through the layer of optical interference structure material will be absorbed so that the colour reflected off the optical interference structure material dominates. On the other hand, the obscuring layer appears semi-transparent when viewed in a sufficiently bright light in a direction normal to the absorbing layer. On transmissive viewing with white incident light therefore, the intensity of the transmission colours exceed the intensity of the reflective colours and show through in a genuine document. This optical variable effect is striking and therefore memorable to the user.

As mentioned previously, the expression "optical interference structure material" is used to refer to any material which can selectively reflect or transmit incident light to create an optically variable effect, for example an angularly dependent coloured reflection or transmission (typically referred to as a "colour shift" effect). In examples described herewith, when visible light is being used, an optical interference structure material may also be referred to as a "colour shift" material. Examples include photonic crystals, liquid crystals, interference pigments, pearlescent pigments, structured interference materials or thin film interference structures including Bragg stacks, as will be described in more detail with reference to the examples given below.

The incident light may comprise visible and/or non-visible light. Likewise, the optical interference structure material may be arranged to selectively reflect light in the non-visible part of the spectrum (including ultra-violet and infra-red). When the incident light is produced by a white light (broad wavelength band) source, preferably the optical variable effect is a colour effect. The optically variable effect is therefore preferably an angularly dependent colour effect.

Advantageously, the light absorbing material absorbs at least 70% of incident visible light, preferably at least 80%, more preferably at least 90%. Visible light is defined here as meaning all light with wavelengths between 350 nm and 800 nm, inclusive. Advantageously the light absorbing material is additionally non-transparent and preferably transmits less than 30% of incident visible light in a single pass, more preferably less than 20%, still preferably less than 10%, most preferably is substantially opaque.

Preferably, the absorbing layer has black or dark areas, however this is not essential, so long as the absorbing layer absorbs reflected light from the optical interference structure material. Desirably, the light absorbing material is dark in colour, preferably black, although alternatives such as dark blue or dark green are also envisaged. For example, the light absorbing material may comprise an ink containing a dark pigment such as carbon black. The light absorbing material may also comprise a magnetic or electrically conductive substance, which may or may not be the same pigment as that which gives the material its colour.

The absorbing layer is in the form of a screen. The pattern of absorbing material is an array of dots or lines. It may have sufficient coverage to maintain reflectivity of the iridescent amplitude interference, but sufficiently transparent to enable transmission colours to shine through the screen. The screen can be regular or stochastic. Indeed, the term "screen" should be construed broadly to encompass many different shapes of screen elements.

The coverage of the screen pattern is in the range 40-70% and more preferably in the range 50-60%. The width of the lines or the diameter of the dots forming the screen are in the range 50-300 µm and the spaces between the dots or lines are also in the range 50-300 µm with values of each set chosen to achieve the desired screen coverage and more preferably in the range 50-200 µm. Typically therefore the dimensions of the fine detail of the screen, that is the lines, dots or other shapes and the spaces therebetween, are of a scale which is not easily resolvable by the human naked eye.

The region that is viewed in reflected light, that being the same region that is viewed in transmitted light, is of a sufficient size to be resolvable by the naked eye and therefore typically has lateral dimensions being each of at least 1 millimetre and more preferably at least 3mm and even more preferably. The larger dimensions of this region in comparison with the finer detail structures discussed above, means that the optical effects of the finer detail are averaged and have a combined effect that is homogeneous in appearance to the naked eye across the viewed region.

Advantageously, appropriate patterning of the absorbing layer may further provide a means of integrating hidden transmission designs. Preferably, parts of an absorbing layer are filled to define an image such as indicia.

The shapes of each of the absorbing layer and the optical interference structure material may be the same, such that for example they have similar footprints that are coincident. Furthermore, whether coincident with the shape of the optical interference structure material or otherwise, the absorbing layer may be shaped, for example so as to form one or more indicia. This allows for further advantageous optical effects to be presented to the user.

Advantageously, devices according to the invention are particularly well suited to deployment on security documents based on polymer document substrates, such as polymer banknotes, since the polymer document substrate can be selected to be transparent and so provide a transparent viewing region or "window" in the document. It will be appreciated however that devices can be formed using a transparent material which is applied to a security document of any sort, such as a conventional paper-based document.

The substrate in the viewing region may be the same substrate as that of the secure document it is protecting, for example the security feature of the current invention may be applied by printing the patterns on either side of a traditional banknote paper. The substrate may be more transparent in the viewing region than elsewhere. In the case of a solely paper substrate the area of greater transparency will be formed typically during the manufacture of the substrate as described in GB-A-2282611 and GB-A-2283026.

Alternatively the substrate comprises a substantially transparent viewing region comprising a polymeric material. Techniques are known in the art for forming transparent regions in both paper and polymeric substrates. For example, WO-A-8300659 describes a polymer banknote formed from a transparent substrate comprising an opacifying coating on both sides of the substrate. The opacifying coating is omitted in localised regions on both sides of the substrate to form a transparent region. WO-A-0039391 describes a method of making a transparent polymeric region in a paper substrate. Other methods for forming transparent regions in paper substrates are described in EP-A-723501, EP-A-724519 and WO-A-03054297.

Examples of security documents with which the present invention can be used include banknotes, fiscal stamps, cheques, postal stamps, certificates of authenticity, articles used for brand protection, bonds, payment vouchers, and the like.

In accordance with another aspect of the present invention, there is also provided a method of forming a security device, comprising the steps of: providing a substrate having a transparent viewing region;
providing, in the transparent viewing region, a layer of optical interference structure material for selectively reflecting and transmitting incident light to generate an optically variable effect, the layer of optical interference structure material having a front side and a rear side, and
providing an absorbing layer comprising an at least partially light absorbing material on the rear side of the layer of optical interference structure material, such that:
   - when a region on the front side of the layer of optical interference structure material receives incident light and the device is viewed in reflected light, the absorbing layer is sufficiently opaque to absorb light that passes through the optical interference structure material and the optically variable effect is observable in reflected light; and
   - when the same region on the front side is viewed in transmitted light, the absorbing layer is sufficiently transparent to permit the passage of light with an intensity that exceeds the intensity of reflected light for the optically variable effect to be observable in transmitted light,
   wherein the absorbing layer is in the form of a screen, wherein the pattern of absorbing material is an array of dots or lines, and the width of the lines or the diameter of the dots is in the range 50-300 µm, and the spaces between the dots or lines are in the range 50-300 µm, with values of each set chosen to achieve a screen coverage in the range 40-70%.

In summary, aspects of the present invention achieve observable optically variable effects, such as angular dependent colours, in reflection as well as transmission from a single region of optical interference structure material receiving incident light. The effects are strong enough to be observed with the naked eye when the incident light is white light. This is made possible by applying an at least partially light absorbing layer, to a layer of photonic material in a window of the security document. When the device is viewed in reflection, the opaque (e.g. black or dark) areas of the absorbing layer will dominate and optically variable effects are seen in reflected light. When viewed in transmission, for example by holding up the device against a sufficiently bright incident light, the intensity of the transmitted light exceeds the intensity of the reflected light and shows through the obscuring layer. The device has the advantage of conveniently authenticating a document by simply changing the angle of view, with striking optically variable effects in both reflected and transmitted light.

### Brief Description of the Drawings

Some examples of security devices located on or in security documents according to the invention will now be described with reference to the accompanying drawings, in which:-
Figures 1a-1c shows are sections through examples an optically variable device according to the invention;
Figure 2 shows an example of a dot screen for use as an at least partially light absorbing layer according to the invention;
Figure 3a-3c are example plan views of a windowed security document carrying an example device according to the invention, when viewed in reflection from either side of the document and in transmission respectively;
Figure 4 shows a further example of an optically variable device.

### Description of Embodiments

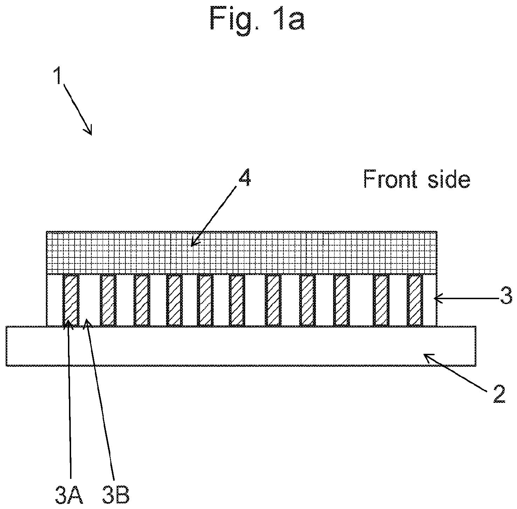

Figure 1a shows a viewing region 1 of a security device having a transparent substrate 2. One side of the substrate 2 comprises a layer of optical interference structure material 4, in this case a Bragg stack. Examples of tunable Bragg stack structures suitable for use with the current invention can be found in WO2009/143625.

Examples of alternative optical interference structure materials suitable for use with the present invention include thin film interference structures and photonic crystal structures. Thin film interference structures comprise repeating layers of different refractive indices, examples can include purely dielectric stacks (metal oxide or polymer) or those composed of alternate dielectric and metallic layers.

Photonic crystal materials exhibit a periodic change in refractive index and, according to the spatial variation in the refractive index, are classified as one-dimensional (1D), two-dimensional (2D) and three-dimensional (3D). 1D photonic crystal structures correspond to thin film interference structures. 2D and 3D photonic crystal structures are structured optical materials in which the refractive index varies periodically in two or preferably three dimensions. These materials exhibit a range of interesting optical effects when subject to electromagnetic radiation of a wavelength comparable to the spatial modulation of the refractive index. Bragg reflection may occur over a range of wavelengths that depend on the direction of incidence/propagation and the periodicity of refractive index variation. This gives rise to photonic '"energy gaps" that are analogous to the electronic band gaps in semiconductors. Typically, electromagnetic waves within a certain frequency range cannot propagate in particular directions within the crystal, and incident electromagnetic radiation at these wavelengths is consequently reflected. It is the presence of such partial photonic band gaps that gives rise to the angular dependent colour replay.

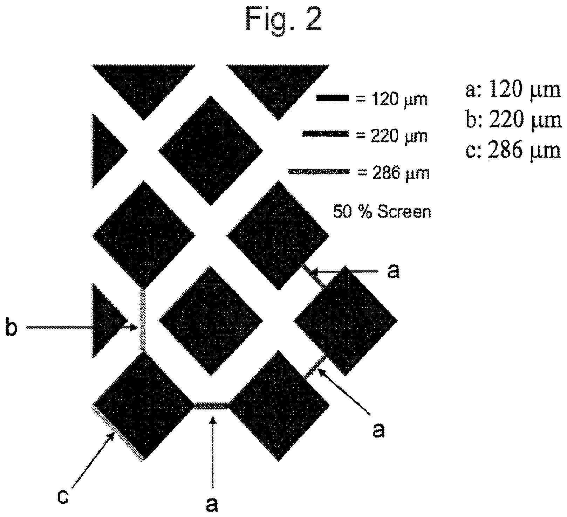

Referring back to Figure 1a, the layer of optical interference structure material 4 is "backed" by a layer of at least partially light absorbing material, in this case a patterned screen 3 formed by an array of closely spaced fine lines 3A separated by spaces 3B (i.e. the screen pitch). In alternative, preferred embodiments, the screen is a fine dot screen, an example of which will be described with reference to Figure 2. As shown in Figures 1a-1c, the location of the material 4 and screen 3 relative to the substrate may vary, since the substrate is transparent and primarily serves to carry the device, without interfering with the incident light or the optical effects. In preferred embodiments, the screen is located between the substrate and the layer of optical interference structure material as shown in Figure 1a.

When illuminated by incident light, the material 4 exhibits a strong reflection effect and the spectral reflectance of the material varies with the angle at which it is viewed, so that the part of the spectrum which is strongly reflected changes as the device is tilted in relation to the direction of the illuminating light. In transmitted white light, a complementary colour to the main reflected colour is observed with a similar colour change on tilting. The width of the lines 3A and the spacing 3B between the lines of the patterned opaque coating is preferably non-resolvable such that the substrate appears a uniform colour which is the colour of the particular wavelength reflected by the optical interference structure material 4 at any specific angle of view in reflective light but appears uniformly transparent in transmissive light to enable the complementary transmission colours to be observed. The presence of the obscuring layer 3A enables the reflected layer to dominate by absorbing sufficient light which is transmitted through the optical interference structure material 4 and which would otherwise overwhelm and conceal the optically variable effect.

The light absorbing material may comprise for example a black or other dark-coloured material such as an ink and renders the overlying optical interference structure material visible in the second partial areas of the region by absorbing stray light other than that reflected by the material which would otherwise overwhelm and conceal the optically variable effect. It will be appreciated, however, that the light absorbing material need not absorb at all (UV and visible) wavelengths, and also need not absorb 100% of the light at those wavelengths it does absorb.

Advantageously, the light absorbing material absorbs at least 70% of incident visible light, preferably at least 80%, more preferably at least 90%. Visible light is defined here as meaning all light with wavelengths between 350 nm and 800 nm, inclusive.

Advantageously the light absorbing material is additionally non-transparent and preferably transmits less than 30% of incident visible light in a single pass, more preferably less than 20%, still preferably less than 10%, most preferably is substantially opaque.

Desirably, the light absorbing material is dark in colour, preferably black, although alternatives such as dark blue or dark green are also envisaged. For example, the light absorbing material may comprise an ink containing a dark pigment such as carbon black. The light absorbing material may also comprise a magnetic or electrically conductive substance, which may or may not be the same pigment as that which gives the material its colour.

The light absorbing material preferably comprises a visually dark, e.g. grey or black, substance such as an ink. An example of a suitable light-absorbing material which can be used in this and all other embodiments disclosed herein would be an ink carrier, lacquer or binder containing a black or dark dye or pigment such as the dye BASF Neozapon X51 or the pigment "carbon black 7" (well dispersed). The dye loading can be up to 50% (by weight) of the final coat of material depending on coat thickness and desired darkness.

The absorbing layer is in the form of a screen. The absorbing layer pattern is an array of dots or lines. It may have sufficient coverage such that sufficient stray light other than that reflected by the optically interference structure material which would otherwise overwhelm and conceal the optically variable effect is absorbed while being sufficient sufficiently transparent to enable the complementary colour to be viewable in transmitted light. Non-linear screens are also envisaged. For example the screen could comprise a circular or sinusoidal array of dots or lines. The screen can be regular or stochastic.

The coverage of the screen pattern is in the range 40-70% and more preferably in the range 50-70%. The width of the lines or the diameter of the dots forming the screen are preferably in the range 100-300 µm and the spaces between the dots or lines are also in the range 100-300 µm with values of each set chosen to achieve the desired screen coverage. The absorbing pattern could be an array of dots or lines with sufficient coverage to maintain the reflectivity of the optically variable material and therefore enable strong reflected colours, but sufficiently transparent to enable transmitted colours. This is particularly appropriate with a polymeric substrate. Preferably, the screen is a regular array forming a uniform dot screen. Figure 2 shows a partial view of a uniform dot screen for use with the present invention. The geometry of the dots shown in Figure 2 corresponds to 50% coverage of the screen. In this example, the dots are filled squares with a side of 286 µm, and a pitch of 120 µm representing the distance between adjacent squares.

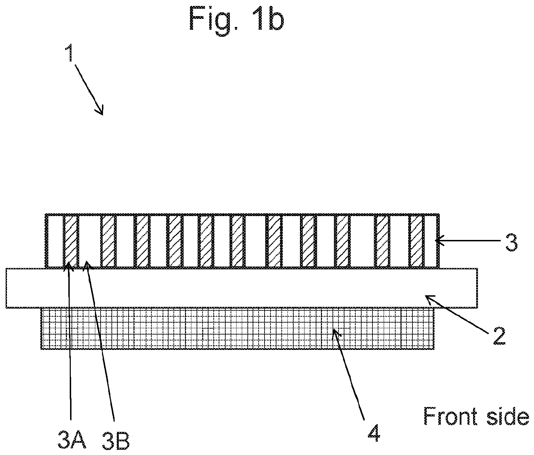

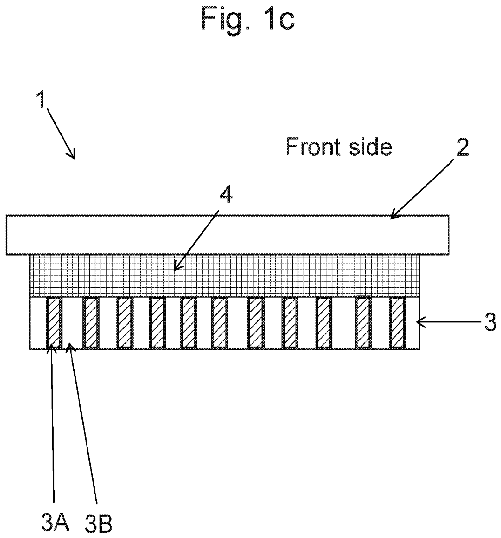

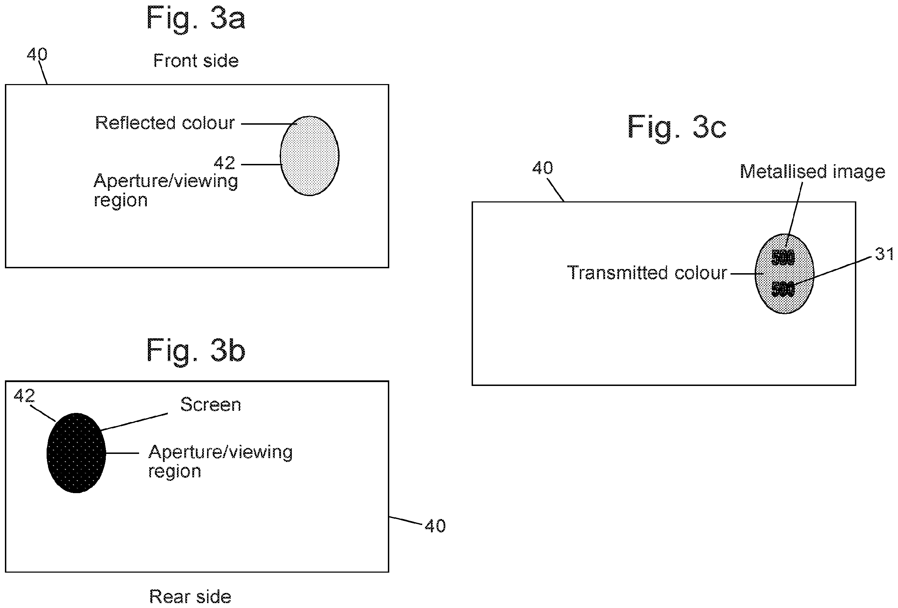

The appropriate patterning of the obscuring layer may further provide a means of integrating "hidden" images or transmission designs. Figure 3 illustrates an example where the optically variable device of the current invention is incorporated into a transparent region of a paper substrate 40. In this example, most of the absorbing screen comprises an array of closely spaced fine lines or dots as described with reference to Figures 1 or 2, but in the localised regions the absorbing coverage will be complete, i.e. substantially 100%, forming a permanent image 31 which is revealed in transmitted light, as shown in Figure 3c. In an alternative embodiment, the absorbing screen will comprise a permanent image formed by an appropriate patterning of the screen.

On viewing the device from the front side, illustrated in Figure 3, in reflection (Figure 3a) the authenticator will observe strong reflection colours. On the front side the numeral "500" is visible on the exposed polymeric film apart from in the aperture region where it is effectively concealed by the optical interference structure material (typically it will only be present where the optically variable film is so will not be visible). On the rear side, numeral "500" is concealed by the complexity of the screen pattern but would be viewable on close examination in reflection. When viewing the device in transmission (Figure 3c) the reflection colours disappear and are replaced by the brighter transmission colours and the numeral "500" becomes visible as a silhouette image against the substantially uniform coloured background. In this manner the optical interference structure material is used to conceal a permanent image 31 in reflected light which is then revealed when image disappears on viewing in transmitted light.

In another embodiment of the invention the absorbing screen could be created by using a light absorbing resist to pattern a metallised substrate using a resist and etch technique to create metallic screen elements superimposed with absorbing screen elements. In effect this would be the method described in EP1467873. The advantage of this is that from the front side the screen would be dark and absorbing, but from the back side the screen would be metallic and more attractive to the eye.

Embodiments of the invention are applicable to both paper and polymer substrates and the permanent image can be applied by printing as well as metallization or demetallisation techniques. Suitable printing techniques include lithography, UV cured lithography, intaglio, letterpress, flexographic printing, gravure printing or screen-printing. The permanent image must be sufficiently opaque to appear as a silhouette in transmitted light. The permanent image can take any form such as patterns, symbols and alphanumeric characters and combinations thereof. The indicia can be defined by patterns comprising solid or discontinuous regions which may include for example line patterns, fine filigree line patterns, dot structures and geometric patterns. Possible characters include those from non-Roman scripts of which examples include but are not limited to, Chinese, Japanese, Sanskrit and Arabic. The permanent image may be single-coloured or multi-coloured.

Security devices of the sorts described above can be utilised in many different ways. Preferably, in some cases the security device forms part of a security article, such as a security thread, patch, foil or strip, for application to or incorporation into a security document. In other examples, the security device may be formed directly on (i.e. integrally with) the security document.

The security device or article can be arranged either wholly on the surface of the base substrate of the security document, as in the case of a stripe or patch, or can be visible only partly on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP-A-0059056. EP-A-0860298 and WO-A-03095188 describe different approaches for the embedding of wider partially exposed threads into a paper substrate. Wide threads, typically having a width of 2 to 6mm, are particularly useful as the additional exposed thread surface area allows for better use of optically variable devices, such as that presently disclosed.

The security device or article may be subsequently incorporated into a paper or polymer base substrate so that it is viewable from both sides of the finished security substrate. Methods of incorporating security elements in such a manner are described in EP-A-1141480 and WO-A-03054297. In the method described in EP-A-1141480, one side of the security element is wholly exposed at one surface of the substrate in which it is partially embedded, and partially exposed in windows at the other surface of the substrate.

Base substrates suitable for making security substrates for security documents may be formed from any conventional materials, including paper and polymer. Techniques are known in the art for forming substantially transparent regions in each of these types of substrate. For example, WO-A-8300659 describes a polymer banknote formed from a transparent substrate comprising an opacifying coating on both sides of the substrate. The opacifying coating is omitted in localised regions on both sides of the substrate to form a transparent region. In this case the transparent substrate can be an integral part of the security device or a separate security device can be applied to the transparent substrate of the document. WO-A-0039391 describes a method of making a transparent region in a paper substrate. Other methods for forming transparent regions in paper substrates are described in EP-A-723501, EP-A-724519, WO-A-03054297 and EP-A-1398174.

The security device may also be applied to one side of a paper substrate so that portions are located in an aperture formed in the paper substrate. An example of a method of producing such an aperture can be found in WO-A-03054297. An alternative method of incorporating a security element which is visible in apertures in one side of a paper substrate and wholly exposed on the other side of the paper substrate can be found in WO-A-2000/39391.

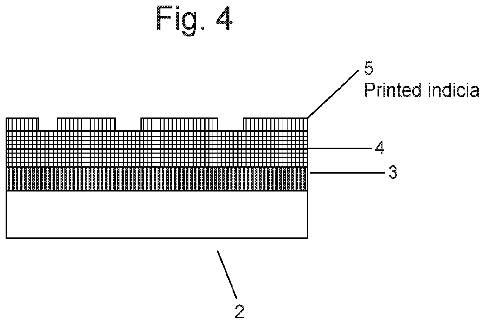

Figure 4 shows a cross-sectional view of a further embodiment of the security device of the current invention. In this example, the device is intended for use as a security label and comprises an inverse opal photonic crystal film 4. On the front side of the photonic crystal film there are printed identifying indicia 5 using inks or dyes. The integration of the optically variable effects such as angular dependent reflected colours with a permanent image including indicia not only increases the aesthetics of the device but also makes it more memorable to the general public. In the example illustrated, the optically variable effects are used to draw the attention of the viewer to the permanent image that can contain important information such as the value of the protected document.

## Claims

1. An optically variable device for inclusion in or on a security document, such as a document of value, comprising a substrate having a transparent viewing region and a layer of optical interference structure material for selectively reflecting and transmitting incident light to generate an optically variable effect, the layer of optical interference structure material having a front side and a rear side, the device further comprising an absorbing layer comprising an at least partially light absorbing material on the rear side of the layer of optical interference structure material, such that,
- when a region on the front side of the layer of optical interference structure material receives incident light and the device is viewed in reflected light, the absorbing layer is sufficiently opaque to absorb light that passes through the optical interference structure material and the optically variable effect is observable in reflected light; and
- when the same region on the front side is viewed in transmitted light, the absorbing layer is sufficiently transparent to permit the passage of light with an intensity that exceeds the intensity of reflected light for the optically variable effect to be observable in transmitted light,
**characterised in that** the absorbing layer is in the form of a screen, wherein the pattern of absorbing material is an array of dots or lines, and the width of the lines or the diameter of the dots is in the range 50-300 µm, and the spaces between the dots or lines are in the range 50-300 µm, with values of each set chosen to achieve a screen coverage in the range 40-70%.

2. A device according to claim 1, wherein the optical variable effect in the reflected light is complementary to the optical variable effect in the transmitted light at all viewing angles.

3. A device according to any preceding claim, wherein, when the incident light is white light, the optically variable effect is a colour effect.

4. A device according to any preceding claim, wherein the optically variable effect is an angularly dependent colour effect.

5. A device according to any preceding claim, wherein the layer of optical interference structure material is located on one side of the substrate and the absorbing layer is located on the same side of the substrate.

6. A device according to claim 5, wherein the absorbing layer is located between the substrate and the layer of optical interference structure material.

7. A device according to any of claims 1 to 4, wherein the layer of iridescent amplitude interference material is located on one side of the substrate and the absorbing layer is located on the other side of the substrate.

8. A device according to any preceding claim, wherein the at least partially light absorbing material absorbs at least 70% of incident visible light, preferably at least 80%, more preferably at least 90%.

9. A device according to any preceding claim, wherein the at least partially light absorbing material is additionally non-transparent and preferably transmits less than 30% of incident visible light in a single pass, more preferably less than 20%, still preferably less than 10%, most preferably substantially opaque.

10. A device according to any preceding claim, wherein the coverage of the screen pattern is in the range 50-60%.

11. A device according to any preceding claim, wherein the layer of iridescent amplitude interference material comprises a photonic crystal.

12. A device according to any preceding claim, wherein the layer of optical interference structure material comprises any of a thin film interference structure, interference pigments, iridescent pigments, pearlescent pigment, mica pigment, and liquid crystal pigments.

13. A device according to any of the preceding claims, wherein the substrate comprises a transparent polymer provided with an opacifying coating, the viewing region being defined by omitting the opacifying coating in a localised region.

14. A security document provided with a security device according to any of the preceding claims.

15. A security document according to claim 14 the security document being chosen from the group comprising banknotes, fiscal stamps, cheques, postal stamps, certificates of authenticity, articles used for brand protection, bonds, payment vouchers, and the like.

16. A method of forming an optically variable device, for inclusion in or on a security document, such as a document of value, comprising the steps of:
providing a substrate having a transparent viewing region;
providing, in the transparent viewing region, a layer of optical interference structure material for selectively reflecting and transmitting incident light to generate an optically variable effect, the layer of optical interference structure material having a front side and a rear side, and
providing an absorbing layer comprising an at least partially light absorbing material on the rear side of the layer of optical interference structure material, such that:
- when a region on the front side of the layer of optical interference structure material receives incident light and the device is viewed in reflected light, the absorbing layer is sufficiently opaque to absorb light that passes through the optical interference structure material and the optically variable effect is observable in reflected light; and
- when the same region on the front side is viewed in transmitted light, the absorbing layer is sufficiently transparent to permit the passage of light with an intensity that exceeds the intensity of reflected light for the optically variable effect to be observable in transmitted light, **characterised in that** the absorbing layer is in the form of a screen, wherein the pattern of absorbing material is an array of dots or lines, and the width of the lines or the diameter of the dots is in the range 50-300 µm, and the spaces between the dots or lines are in the range 50-300 µm, with values of each set chosen to achieve a screen coverage in the range 40-70%.

## Patentansprüche

1. Optisch variable Vorrichtung zum Einschluss in oder auf einem Sicherheitsdokument, wie z.B. einem Wertdokument, die ein Substrat mit einem transparenten Betrachtungsbereich und eine Schicht aus optischem Interferenzstrukturmaterial zum selektiven Reflektieren und Durchlassen von einfallendem Licht umfasst, um einen optisch variablen Effekt zu erzeugen, wobei die Schicht aus optischem Interferenzstrukturmaterial eine Vorderseite und eine Rückseite aufweist, wobei die Vorrichtung ferner eine absorbierende Schicht umfasst, die ein zumindest teilweise lichtabsorbierendes Material aus optischem Interferenzstrukturmaterial auf der Rückseite der Schicht umfasst, so dass,
- wenn ein Bereich auf der Vorderseite der Schicht aus optischem Interferenzstrukturmaterial einfallendes Licht empfängt und die Vorrichtung in reflektiertem Licht betrachtet wird, die absorbierende Schicht ausreichend lichtundurchlässig ist, um Licht zu absorbieren, das durch das optische Interferenzstrukturmaterial hindurchgeht, und der optisch variable Effekt im reflektierten Licht beobachtbar wird; und,
- wenn derselbe Bereich auf der Vorderseite im durchgelassenen Licht betrachtet wird, die absorbierende Schicht transparent genug ist, um den Durchgang von Licht mit einer Intensität zu ermöglichen, die die Intensität von reflektiertem Licht übersteigt, damit der optisch variable Effekt im durchgelassenen Licht beobachtet werden kann,
**dadurch gekennzeichnet, dass** die absorbierende Schicht die Form eines Rasters aufweist, wobei das Muster von absorbierendem Material eine Anordnung von Punkten oder Linien ist und die Breite der Linien oder der Durchmesser der Punkte im Bereich von 50-300 µm liegt und die Zwischenräume zwischen den Punkten oder Linien im Bereich von 50-300 µm liegen, wobei Werte jedes Satzes so gewählt sind, dass eine Rasterabdeckung im Bereich von 40-70% erhalten wird.

2. Vorrichtung nach Anspruch 1, wobei der optisch variable Effekt in dem reflektierten Licht unter allen Betrachtungswinkeln komplementär zu der optisch variablen Wirkung im durchgelassenen Licht ist.

3. Vorrichtung nach einem der vorhergehenden Ansprüche, wobei, wenn das einfallende Licht weißes Licht ist, der optisch variable Effekt ein Farbeffekt ist.

4. Vorrichtung nach einem der vorhergehenden Ansprüche, wobei der optisch variable Effekt ein winkelabhängiger Farbeffekt ist.

5. Vorrichtung nach einem der vorhergehenden Ansprüche, wobei sich die Schicht aus optischem Interferenzstrukturmaterial auf einer Seite des Substrats befindet und die absorbierende Schicht sich auf derselben Seite des Substrats befindet.

6. Vorrichtung nach Anspruch 5, wobei sich die absorbierende Schicht zwischen dem Substrat und der Schicht aus optischem Interferenzstrukturmaterial befindet.

7. Vorrichtung nach einem der Ansprüche 1 bis 4, wobei sich die Schicht aus irisierendem Amplituden-Interferenzmaterial auf einer Seite des Substrats befindet und die absorbierende Schicht sich auf der anderen Seite des Substrats befindet.

8. Vorrichtung nach einem der vorhergehenden Ansprüche, wobei das zumindest teilweise lichtabsorbierende Material mindestens 70% von einfallendem sichtbaren Licht absorbiert, vorzugsweise mindestens 80%, noch bevorzugter mindestens 90%.

9. Vorrichtung nach einem vorhergehenden Anspruch, wobei das zumindest teilweise lichtabsorbierende Material zusätzlich lichtundurchlässig ist und vorzugsweise weniger als 30% von einfallendem sichtbaren Licht in einem einzigen Durchgang durchlässt, bevorzugter weniger als 20%, noch bevorzugter weniger als 10%, und am meisten bevorzugt im Wesentlichen lichtundurchlässig ist.

10. Vorrichtung nach einem der vorhergehenden Ansprüche, wobei die Abdeckung des Rastermusters im Bereich von 50-60% liegt.

11. Vorrichtung nach einem der vorhergehenden Ansprüche, wobei die Schicht aus irisierendem Amplituden-Interferenzmaterial einen photonischen Kristall umfasst.

12. Vorrichtung nach einem der vorhergehenden Ansprüche, wobei die Schicht aus optischem Interferenzstrukturmaterial eine Dünnfilm-Interferenzstruktur, Interferenzpigmente, irisierende Pigmente, Perlglanzpigmente, Glimmerpigmente und Flüssigkristallpigmente umfasst.

13. Vorrichtung nach einem der vorhergehenden Ansprüche, wobei das Substrat ein transparentes Polymer umfasst, das mit einer lichtundurchlässigen Beschichtung versehen ist, wobei der Betrachtungsbereich durch Weglassen der lichtundurchlässigen Beschichtung in einem lokalisierten Bereich definiert ist.

14. Sicherheitsdokument, das mit einer Sicherheitsvorrichtung nach einem der vorhergehenden Ansprüche versehen ist.

15. Sicherheitsdokument nach Anspruch 14, wobei das Sicherheitsdokument aus der Gruppe ausgewählt wird, die Banknoten, Steuermarken, Schecks, Postwertzeichen, Echtheitszertifikate, Artikel, die zum Markenschutz dienen, Wertpapiere, Zahlungsbelege und dergleichen umfasst.

16. Verfahren zum Bilden einer optisch variablen Vorrichtung zum Einschluss in oder auf einem Sicherheitsdokument, wie z.B. einem Wertdokument, folgende Schritte umfassend:
Bereitstellen eines Substrats mit einem transparenten Betrachtungsbereich;
Bereitstellen einer Schicht aus optischem Interferenzstrukturmaterial in dem transparenten Betrachtungsbereich zum selektiven Reflektieren und Durchlassen von einfallendem Licht, um einen optisch variablen Effekt zu erzeugen, wobei die Schicht aus optischem Interferenzstrukturmaterial eine Vorderseite und eine Rückseite aufweist, und
Bereitstellen einer absorbierenden Schicht, die ein zumindest teilweise lichtabsorbierendes Material auf der Rückseite der Schicht aus optischem Interferenzstrukturmaterial umfasst, so dass,
- wenn ein Bereich auf der Vorderseite der Schicht aus optischem Interferenzstrukturmaterial einfallendes Licht empfängt und die Vorrichtung in reflektiertem Licht betrachtet wird, die absorbierende Schicht ausreichend lichtundurchlässig ist, um Licht zu absorbieren, das durch das optische Interferenzstrukturmaterial hindurchgeht, und der optisch variable Effekt im reflektierten Licht beobachtbar wird; und,
- wenn derselbe Bereich auf der Vorderseite in durchgelassenem Licht betrachtet wird, die absorbierende Schicht transparent genug ist, um den Durchgang von Licht mit einer Intensität zu ermöglichen, die die Intensität von reflektiertem Licht übersteigt, damit der optisch variable Effekt im durchgelassenen Licht beobachtet werden kann, **dadurch gekennzeichnet, dass** die absorbierende Schicht die Form eines Rasters aufweist, wobei das Muster von absorbierendem Material eine Anordnung von Punkten oder Linien ist und die Breite der Linien oder der Durchmesser der Punkte im Bereich von 50-300 µm liegt und die Zwischenräume zwischen den Punkten oder Linien im Bereich von 50-300 µm liegen, wobei Werte jedes Satzes so gewählt sind, dass eine Rasterabdeckung im Bereich von 40-70% erhalten wird.

## Revendications

1. Dispositif à variation optique à inclure dans ou sur un document de sécurité, tel qu'un document de valeur, comprenant un substrat présentant une région de visualisation transparente et une couche de matériau de structure d'interférence optique pour réfléchir et transmettre sélectivement une lumière incidente afin de produire un effet à variation optique, la couche de matériau de structure d'interférence optique présentant un côté avant et un côté arrière, le dispositif comprenant en outre une couche absorbante comprenant un matériau absorbant au moins partiellement la lumière sur le côté arrière de la couche de matériau de structure d'interférence optique, de sorte que,
- quand une région sur le côté avant de la couche de matériau de structure d'interférence optique reçoit une lumière incidente et que le dispositif est visualisé dans la lumière réfléchie, la couche absorbante est suffisamment opaque pour absorber la lumière qui passe à travers le matériau de structure d'interférence optique et l'effet à variation optique est observable dans la lumière réfléchie ; et
- quand la même région sur le côté avant est visualisée dans la lumière transmise, la couche absorbante est suffisamment transparente pour permettre le passage de lumière avec une intensité qui dépasse l'intensité de lumière réfléchie pour que l'effet à variation optique soit observable dans la lumière transmise,
caractérisé en que la couche absorbante présente la forme d'un tamis, dans lequel le motif de matériau absorbant est un réseau de points ou de lignes, et la largeur des lignes ou le diamètre des points se situe dans la plage allant de 50 à 300 µm, et les espaces entre les points ou les lignes se situent dans la plage allant de 50 à 300 µm, avec des valeurs de chaque ensemble choisies pour obtenir une couverture de tamis se situant dans la plage allant de 40 à 70 %.

2. Dispositif selon la revendication 1, dans lequel l'effet à variation optique dans la lumière réfléchie est complémentaire de l'effet à variation optique dans la lumière transmise selon tous les angles de vision.

3. Dispositif selon une quelconque revendication précédente, dans lequel, quand la lumière incidente est une lumière blanche, l'effet à variation optique est un effet de couleur.

4. Dispositif selon une quelconque revendication précédente, dans lequel l'effet à variation optique est un effet de couleur angulairement dépendant.

5. Dispositif selon une quelconque revendication précédente, dans lequel la couche de matériau de structure d'interférence optique est située d'un côté du substrat et la couche absorbante est située du même côté du substrat.

6. Dispositif selon la revendication 5, dans lequel la couche absorbante est située entre le substrat et la couche de matériau de structure d'interférence optique.

7. Dispositif selon l'une quelconque des revendications 1 à 4, dans lequel la couche de matériau d'interférence d'amplitude iridescente est située d'un côté du substrat et la couche absorbante est située de l'autre côté du substrat.

8. Dispositif selon une quelconque revendication précédente, dans lequel le matériau absorbant au moins partiellement la lumière absorbe au moins 70 % de la lumière visible incidente, de préférence au moins 80 %, plus préférentiellement au moins 90 %.

9. Dispositif selon une quelconque revendication précédente, dans lequel le matériau absorbant au moins partiellement la lumière est en outre non transparent et transmet de préférence moins de 30 % de lumière visible incidente en un seul passage, plus préférentiellement moins de 20 %, de manière davantage préférée moins de 10 %, le plus préférablement sensiblement opaque.

10. Dispositif selon une quelconque revendication précédente, dans lequel la couverture du motif de tamis se situe dans la plage allant de 50 % à 60 °/.

11. Dispositif selon une quelconque revendication précédente, dans lequel la couche de matériau d'interférence d'amplitude iridescente comprend un cristal photonique.

12. Dispositif selon une quelconque revendication précédente, dans lequel la couche de matériau de structure d'interférence optique comprend l'un quelconque des éléments suivants : une structure d'interférence à film mince, des pigments d'interférence, des pigments iridescents, un pigment nacré, un pigment de mica et des pigments à cristaux liquides.

13. Dispositif selon une quelconque revendication précédente, dans lequel le substrat comprend un polymère transparent pourvu d'un revêtement opacifiant, la région de visualisation étant définie en omettant le revêtement opacifiant dans une région localisée.

14. Document de sécurité muni d'un dispositif de sécurité selon une quelconque revendication précédente.

15. Document de sécurité selon la revendication 14, le document de sécurité étant choisi dans le groupe comprenant les billets de banque, les timbres fiscaux, les chèques, les timbres postaux, les certificats d'authenticité, les articles utilisés pour la protection des marques, les obligations, les bordereaux de paiement et analogues.

16. Procédé de formation d'un dispositif à variation optique, à inclure dans ou sur un document de sécurité, tel qu'un document de valeur, comprenant les étapes consistant à :
fournir un substrat présentant une région de visualisation transparente ;
fournir, dans la région de visualisation transparente, une couche de matériau de structure d'interférence optique pour réfléchir et transmettre sélectivement la lumière incidente afin de produire un effet à variation optique, la couche de matériau de structure d'interférence optique présentant un côté avant et un côté arrière, et
fournir une couche absorbante comprenant un matériau absorbant au moins partiellement la lumière sur le côté arrière de la couche de matériau de structure d'interférence optique, de sorte que :
- quand une région sur le côté avant de la couche de matériau de structure d'interférence optique reçoit une lumière incidente et que le dispositif est visualisé dans la lumière réfléchie, la couche absorbante est suffisamment opaque pour absorber la lumière qui passe à travers le matériau de structure d'interférence optique et l'effet à variation optique est observable dans la lumière réfléchie ; et
- quand la même région sur le côté avant est visualisée dans la lumière transmise, la couche absorbante est suffisamment transparente pour permettre le passage de lumière avec une intensité qui dépasse l'intensité de lumière réfléchie pour que l'effet à variation optique soit observable dans la lumière transmise, caractérisé en que la couche absorbante présente la forme d'un tamis, dans lequel le motif de matériau absorbant est un réseau de points ou de lignes, et la largeur des lignes ou le diamètre des points se situe dans la plage allant de 50 à 300 µm, et les espaces entre les points ou les lignes se situent dans la plage allant de 50 à 300 µm, avec des valeurs de chaque ensemble choisies pour obtenir une couverture de tamis se situant dans la plage allant de 40 à 70 %
